## Europäisches Patentamt

## European Patent Office

## Office européen des brevets

(19)

(11) Veröffentlichungsnummer: **0 232 429**
**A1**

# EUROPÄISCHE PATENTANMELDUNG

(12)

veröffentlicht nach Art. 158 Abs. 3 EPÜ

(21) Anmeldenummer: 86904983.3

(22) Anmeldetag: 29.05.86

Daten der zugrundeliegenden internationalen Anmeldung:

(86) Internationale Anmeldenummer:
**PCT/SU 86/00047**

(87) Internationale Veröffentlichungsnummer:
**WO 87/00458 (29.01.87 87/3)**

(51) Int. Cl.⁴: **B 21 J 13/06, F 16 F 15/04**

(30) Priorität: 26.07.85 SU 3951526
06.08.85 SU 3934668
06.08.85 SU 3934669

(43) Veröffentlichungstag der Anmeldung: 19.08.87
**Patentblatt 87/34**

(84) Benannte Vertragsstaaten: **AT BE CH DE FR GB IT LI NL SE**

(71) Anmelder: **GORGOVSKY POLITEKHNICHESKY INSTITUT IMENI A.A. ZHDANOVA, ul. K. Minima 24, Gorky, 603600 (SU)**

(72) Erfinder: **KOSHELEV, Valery Petrovich, ul. N.Suslovoi, 5-2-75, Gorky, 603106 (SU)**

(74) Vertreter: **Finck, Dieter et al, Patentanwälte v. Füner, Ebbinghaus, Finck Mariahilfplatz 2 & 3, D-8000 München 90 (DE)**

(54) **SCHWINGUNGSDÄMPFANORDNUNG FÜR MASCHINEN UND DEMONTAGE- UND MONTAGEVERFAHREN.**

(57) Schwingungsisolierende Vorrichtung für stoß- oder vibrationserzeugende Maschinen, die Blattfedern (1) enthält, die mit ihren Bügeln (3) in Vertiefungen (6) hineinragen, die in der Sohle (4) der Maschine ausgeführt sind, während die Enden (7) jeder Blattfeder (1) auf einem individuellen Auflager (9) in einer Höhe H über dem Fundament (11) liegen, die durch folgende Bedingung bestimmt wird

$$H > 2(h + \delta),$$

worin

h – Tiefe der Versenkung (6) des Bügels (3) der Blattfeder (1) in die Sohle (4) der Maschine;

δ – statische Durchbiegung der Blattfeder (1) sind.

Verfahren zur Demontage und Montage einer schwingungsisolierenden Vorrichtung, das die Entlastung einer beschädigten Blattfeder (1), deren Entfernung und die darauffolgende Montage einer neuen Blattfeder in umgekehrter Reihenfolge beinhaltet. Vor der Entlastung der beschädigten Blattfeder (1) wird ihr Ende nach oben gezogen bis zur vollen Entlastung des Auflagers (9), wonach das Auflager (9) entfernt und die beschädigte Blattfeder (1) durch Herabsenken ihres angehobenen Endes entlastet wird.

- 1 -

0232429

SCHWINGUNGSISOLIERENDE VORRICHTUNG FÜR STOß- ODER
VIBRATIONSERZEUGENDE MASCHINEN UND VERFAHREN ZU
DEREN DEMONTAGE UND MONTAGE

### Gebiet der Technik

Die vorliegende Erfindung bezieht sich auf den Schwer- und Energiemaschinenbau und betrifft schwingungsisolierende Vorrichtungen für stoß- oder vibrationserzeugende Maschinen und Verfahren zu deren Demontage und Montage.

### Vorhergehender Stand der Technik

Beim Betrieb von stoß- und vibrationserzeugenden Maschinen entstehen erhebliche dynamische Belastungen, die auf das Fundament der betreffenden Maschinen übertragen werden und dasselbe in kurzer Zeit zerstören.

Diese Belastungen werden über die Bodengründung auf die Fundamente der umgebenden Gebäude und Anlagen übertragen, wodurch deren ungleichmäßiges Setzen und ihre allmähliche Zerstörung hervorgerufen wird.

Die Wiederherstellung der beschädigten Fundamente ist ein komplizierter, zeit- und kostspieliger Prozeß.

Es ist eine schwingungsisolierende Vorrichtung für Gesenkschmiedehämmer bekannt, die einen Trägheitsblock, auf dem auf einer Holz- oder Gummizwischenlage die Schabotte des Hammers aufgestellt ist, und Schwingungsisolatoren und Schwingungsdämpfer enthält, z.B. Federn oder Dämpfer, die unter dem Trägheitsblock zwischen diesem und dem Fundament angebracht sind (siehe z.B. das Buch I. V. Klimov, V.P. Koshelev, V.S.Nosov. Die Schwingungsisolation von Gesenkschmiedehämmern. Moskau, Verlag "Mashinostroenie", 1979, S. 49 bis 53).

Bei solch einer Konstruktion der schwingungsisolierenden Vorrichtung wird die dynamische Belastung vom Trägheitsblock aufgenommen und durch die Federn und Schwingungsdämpfer gelöscht, die unter dem Trägheitsblock angebracht sind, der selbst nicht schwingungsgeschützt ist und einer intensiven Zerstörung unterliegt.

Zum Auswechseln der ausgefallenen schwingungsisolierenden Vorrichtung muß der Hammer demontiert und der zerstörte Trägheitsblock, die Federn und die Dämpfer entfernt und durch neue ersetzt werden. Das erfordert erhebliche Zeit und Mittel.

In der letzten Zeit verzichtet man auf die Verwendung von Trägheitsblöcken für stoß- und vibrationserzeugende Maschinen und stellt die Vibrationsisolatoren und Schwingungsdämpfer unmittelbar unter den Maschinen auf.

Es sind schwingungsisolierende Vorrichtungen für Schmiedehämmer bekannt, die Blattfedern enthalten, die in einer Grube unmittelbar unter der Schabotte auf Auflagern liegen, die auf elastischen Zwischenlagen auf einem Fundament angeordnet sind. In der Sohle der Schabotte sind Vertiefungen ausgeführt, in die die Federbügel der Blattfedern hineinragen (siehe z.B. das Buch von I.V. Klimov, V.P. Koshelev, V.S.Nosov. Die Schwingungsisolation von Gesenkschmiedehämmern. Moskau, Verlag "Mashinostroenie, 1979, S. 75 bis 76).

Diese Vorrichtung ist als Prototyp ausgewählt worden. In der oben beschriebenen schwingungsisolierenden Vorrichtung liegen die Enden der Blattfedern auf einem für die gesamte Federgruppe gemeinsamen Auflager. Das Auflager ist in Form einer ebenen Platte ausgeführt.

Auf Grund unterschiedlicher Kennwerte (Abmessungen, Reibungskoeffizient u. ä.) beeinflussen sich die Federn gegenseitig während ihrer Nutzung über das Auflager und rufen dadurch zusätzliche Belastungen hervor, die die Zerstörung der Federn beschleunigen.

Der Ausfall einzelner Federn führt zur Verschiebung der Auflagespitze der schwingungsisolierenden Vorrichtung relativ zum Schwerpunkt des Hammers und bewirkt ein Aufschaukeln des Hammers und neue zusätzliche Belastungen der Federn, was negativ die Leistungsfähigkeit und die Zuverlässigkeit des Objekts beeinflußt. Das Aufschaukeln der Ausrüstung beseitigt man durch Auswechseln der beschädigten Federn. Zum Auswechseln einer beschädigten Feder muß der Hammer mit einer Winde gehoben werden, was in vielen Fällen technisch Schwierigkeiten bereitet.

Beim Betrieb des Hammers wird der Zwischenraum zwischen dem Ende der Federn und dem ebenen Auflager mit Hammerschlag verstopft. Dadurch verschiebt sich der Auflagepunkt vom Ende zur Mitte der Feder, wodurch sich deren Steife ändert und die Möglichkeit eines Wegdrückens des Auflagers unter den Federn hervor entsteht. Die Zentrierung des Hammers im ganzen wird gestört. Im Endergebnis verringert sich seine Zuverlässigkeit und Lebensdauer.

Offenbarung der Erfindung

Der Erfindung liegt die Aufgabe zugrunde, eine schwingungsisolierende Vorrichtung für stoß- oder vibrationserzeugende Maschinen zu schaffen, in der die Blattfedern so angebracht sind, daß die Zuverlässigkeit und die Lebensdauer der schwingungsisolierenden Vorrichtung und der Maschine selbst erhöht wird, sowie ein Verfahren zu einem verhältnismäßig schnellen Auswechsel der Blattfedern bei Reparaturen der schwingungsisolierenden Vorrichtung zu entwickeln.

Diese Aufgabe wird dadurch gelöst, daß in einer schwingungsisolierenden Vorrichtung für stoß- oder vibrationserzeugende Maschinen, die Blattfedern enthält, die mit ihren Bügeln in Vertiefungen hineinragen, die in der Grundplatte der Maschine ausgeführt sind, und mit den Enden auf auf einem Fundament stehenden Auflagern liegen, gemäß der Erfindung die Enden jeder Blattfeder auf einem individuellen Auflager in einer Höhe H über dem Fundament aufliegen, die durch folgende Bedingungen bestimmt wird:

$$H > 2 (h + \delta),$$

worin

h - Tiefe der Versenkung des Bügels der Blattfeder in die Grundplatte der Maschine;

$\delta$ - statische Durchbiegung der Blattfeder sind.

Es ist zweckmäßig, daß das Auflager eine T-förmige Gestalt hat und mit dem Flansch zum Fundament hin gerichtet ist, während auf dem Stempel das Ende der Blattfeder auflagert.

Eine solche Ausführung des Auflagers ist einfach und leicht ausführbar und zuverlässig im Betrieb, da sie die Sicherheit der Feder und eine gleichmäßige Verteilung der Belastung des Fundaments gewährleistet und ein Eindringen von Hammerschlag in den Zwischenraum zwischen dem Ende der Feder und dem Auflager verhindert.

— 4 —

Es empfiehlt sich auch, die Blattfeder in zwei Stufen derart anzubringen, daß die Bügel der oberen Stufe auf den Bügeln der unteren Stufe auflagern, während der Stempel jedes Auflagers für die Aufnahme der Enden der Blattfedern beider Stufen in einer Entfernung voneinander, die der Höhe des Bügels gleicht, eingerichtet ist.

Solch eine Anordnung der Federn empfiehlt sich in den Fällen, wenn unter eine verhältnismäßig kleine Auflagefläche der Maschine bei verhältnismäßig großer Belastung eine errechnete Anzahl Federn ohne Vergrößerung der Auflagefläche untergebracht werden soll.

Es wird ein Verfahren zur Demontage und Montage der schwingungsisolierenden Vorrichtung angeboten, das die Entlastung der beschädigten Blattfeder, deren Entfernung und die darauffolgende Montage einer neuen Blattfeder in umgekehrter Reihenfolge beinhaltet; gemäß der Erfindung wird vor dem Entlasten der beschädigten Blattfeder ihr Ende nach oben gezogen bis zur vollen Entlastung des Auflagers, wonach das Auflager entfernt und die beschädigte Blattfeder durch Herabsenken ihres angehobenen Endes entlastet wird.

Dieses Verfahren ermöglicht verhältnismäßig schnell und leicht das Auswechseln der Blattfedern und erfordert keine speziellen Vorrichtungen zum Entfernen der Federn und zum Anheben des Hammers.

Es wird ein Schmiedehammer angeboten, der mit seiner Schabotte auf einer schwingungsisolierenden Vorrichtung montiert ist, die gemäß der vorliegenden, oben beschriebenen Erfindung ausgeführt ist, wobei ein Teil der Schabotte des Hammers und die schwingungsisolierende Vorrichtung in eine Flüssigkeit getaucht sind.

Das Eintauchen eines Teils der Schabotte des Hammers mit der schwingungsisolierenden Vorrichtung in eine Flüssigkeit schafft günstige Reibungsbedingungen zwischen den Blättern der Feder und verbessert dadurch die Dämpfwirkung. Außerdem spielt die Flüssigkeit die Rolle einer mit der Schabotte verbundenen Masse und stellt einen dynamischen Schwingungsdämpfer dar.

Man kann auf dem Auflageteil der Schabotte des Schmiedehammers einen von unten offenen Hohlraum ausführen.

Der von unten offene, mit Luft gefüllte Hohlraum verbessert die Schwingungsisolierung und übt die Funktion einer Feder zwischen der mit der Schabotte verbundenen Masse (Flüssigkeit) und der Schabotte im System der dynamischen Schwingungsdämpfung aus und verhindert den Durchgang von Schallfrequenzen der Schabotte durch die Flüssigkeit zum Fundament.

Die erfindungsgemäße schwingungsisolierende Vorrichtung für stoß- oder vibrationserzeugende Maschinen und das erfindungsgemäße Verfahren zu deren Demontage und Montage ermöglichen bei einer verhältnismäßig einfachen konstruktiven Ausführung eine Erhöhung der Zuverlässigkeit und eine Verlängerung der Lebensdauer der schwingungsisolierenden Vorrichtung und gewährleisten ein verhältnismäßig schnelles Auswechseln beschädigter Blattfedern mit einfachen Mittel ohne Anheben des Hammers mit Winden.

Kurze Beschreibung der Zeichnungen

Im folgenden wird die vorliegende Erfindung durch die Beschreibung konkreter Ausführungsbeispiele mit Hinweisen auf die beiliegenden Zeichnungen erläutert, und zwar zeigt:

Fig. 1 eine erfindungsgemäße schwingungsisolierende Vorrichtung in der Vorderansicht;

Fig. 2 eine Ansicht in der Pfeilrichtung A in Fig. 1;

Fig. 3 die Anordnung der Blattfedern in zwei Stufen;

Fig. 4 einen schwingungsisolierten Hammer mit der Schabotte und der schwingungsisolierenden Vorrichtung, die in eine Flüssigkeit getaucht sind, gemäß der Erfindung.

Beste Ausführungsvariante der Erfindung

In einem konkreten Beispiel wird eine schwingungsisolierende Vorrichtung betrachtet, auf der ein Schmiedehammer montiert ist.

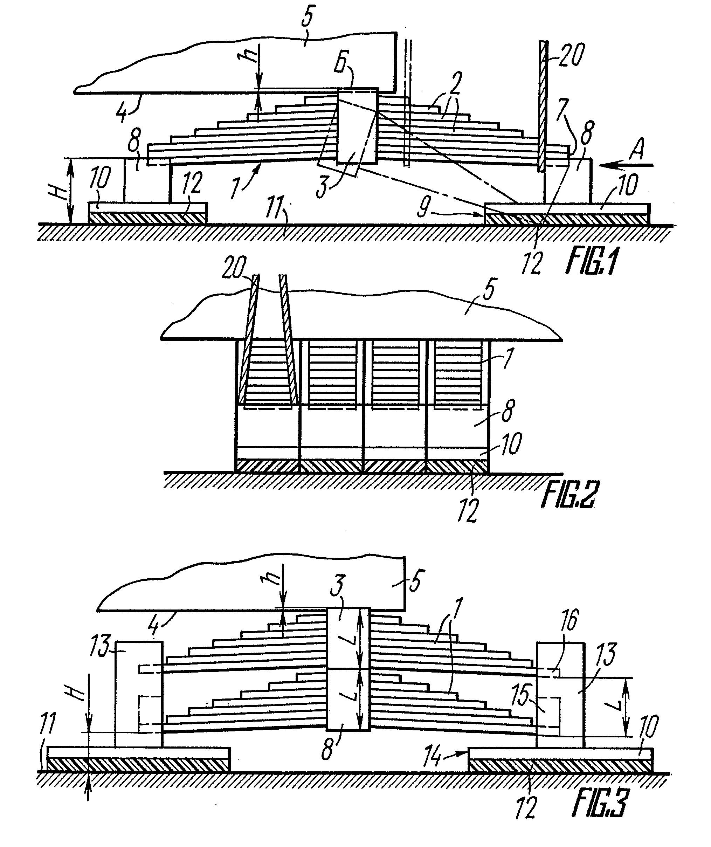

Die schwingungsisolierende Vorrichtung enthält Blattfedern 1 (Fig.1), die in der weiteren Beschreibung als Federn 1 bezeichnet werden, deren Blätter 2 durch Bügel 3 zusammengehalten werden. Zur Verhinderung einer Verschiebung der Feder 1 auf der Sohle 4 der Schabotte 5 des Hammers (nicht abgebildet) ist die Sohle mit Vertiefungen 6 in Form gefräster Nuten versehen, in die die Auflageflächen der Bügel 3 hineintreten.

Die Vertiefungen können auch in Form aufgeschweißter Bördelränder ausgeführt werden.

Die Fixierung der Feder zur Verhütung ihrer Verschiebung relativ zur Sohle der Schabotte kann mit Hilfe eines Stiftes erfolgen, der in den Bütel eingepreßt und in eine in Form eines Sacklochs in der Sohle der Schabotte ausgeführte Vertiefung eingeführt wird.

Die Vertiefung 6 in der Sohle 4 der Schabotte 5 des Hammers hat eine Tiefe h, die so festgelegt wird, daß eine horizontale Verschiebung der Feder 1 relativ zur Sohle 4 der Schabotte 5 zuverlässig verhindert wird.

Die Federn 1 werden mit ihren Enden 7 in in Stempeln 8 der Auflager 9 ausgeführten Nuten fixiert. Unter jedem Ende 7 der Feder 1 befindet sich ein individuelles Auflager 9. Jedes Auflager 9 ist in T-Form ausgeführt und mit seinem Flansch 10 zum Fundament 11 hin gerichtet und steht auf einer elastischen Zwischenlage 12.

Die elastischen Zwischenlagen 12 ermöglichen eine Bewegung der Enden 7 der Federn 1 zusammen mit den Auflagern 9 in horizontaler Ebene in den Grenzen der elastischen Schubverformung der Zwischenlage 12 in Abhängigkeit von der statischen und dynamischen Belastung des Hammers. Diese Bewegungen werden durch die Abmessungen und die elastischen Eigenschaften des Werkstoffes der elastischen Zwischenlage 12 ermöglicht.

Die mit dem Fundament 11 und dem Auflager 9 in Kontakt stehenden Oberflächen der elastischen Zwischenlage 12 werden durch Reibungskräfte vor einem Verschieben bewahrt.

Die Enden 7 jeder Feder 1 liegen auf einem individuellen Auflager 9 in einer Höhe H über dem Fundament 11, die durch folgende Bedingung bestimmt wird:

$$H > 2 ( h + \delta ),$$

worin

h - Tiefe der Versenkung des Bügels 3 der Blattfeder 1 in die Sohle 4 der Schabotte 5;

$\delta$ - statische Durchbiegung der Blattfeder 1, die durch die Gewichtsbelastung der Blattfeder und deren Steife bestimmt wird, sind.

- 7 -

Das Anbringen der Feder 1 auf Auflagern 9 von T-förmiger Gestalt in einer Höhe H über dem Fundament 11 gewährleistet ihre notwendige horizontale Standsicherheit durch den Flansch 10.

Der Flansch 10 des Auflagers 9 ermöglicht eine Verteilung der von der Feder 1 ausgehenden Belastung auf die elastische Zwischenlage 12 und das Fundament 11.

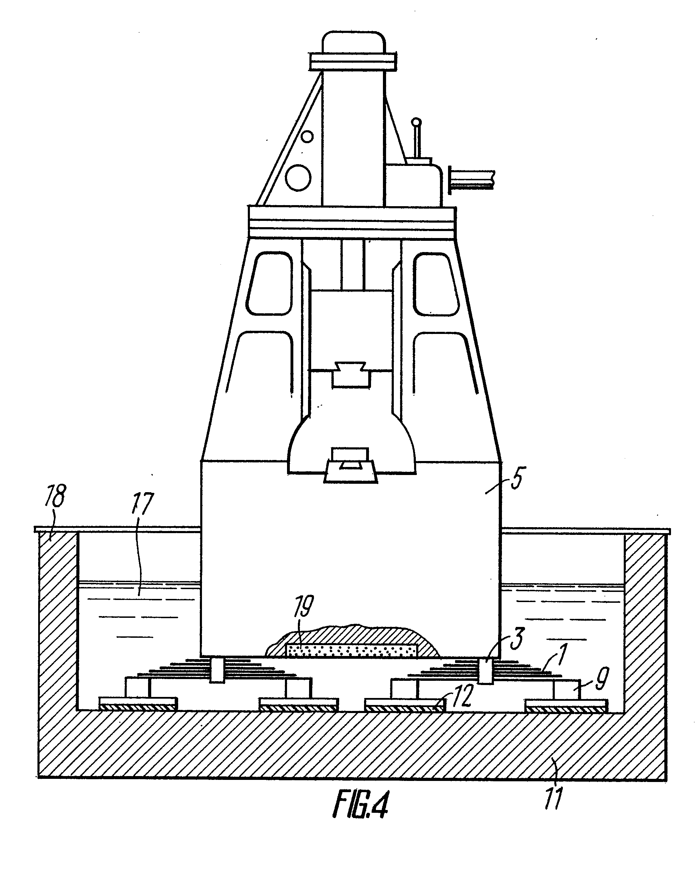

Die Federn 1 sind unter der Schabotte 5 des Hammers in Reihen (Fig. 2) angeordnet. Wenigstens ein Ende 7 jeder Feder 1 befindet sich zusammen mit dem dazugehörigen Auflager 9 außerhalb der Umgrenzungslinie der Schabotte 5 zur Erhöhung der Standfestigkeit des Hammers durch Vergrößerung der Basis seiner Standfläche.

Solch eine Anordnung der Federn empfiehlt sich für Hämmer mit einer Masse der fallenden Teile unter 10 t.

Für Hämmer mit einer größeren Masse der fallenden Teile ist es zweckmäßig, die Blattfedern in zwei Stufen derart anzuordnen, daß die Bügel 3 der oberen Stufe auf den Bügeln 3 der unteren Stufe auflagern, während der Stempel 13 (Fig. 3) jedes Auflagers 14 für die Aufnahme der Enden 7 der Federn 1 beider Stufen in einer Entfernung voneinander, die der Höhe L des Bügels 3 gleicht, eingerichtet ist. Die Enden 7 der Federn 1 der unteren Stufe beinden sich in der Höhe H über dem Fundament, die nach der oben angeführten Formel festgelegt wird. Der Bügel 3 der oberen Feder 1 ist in der Sohle 4 der Schabotte 5 auf eine beliebige der oben beschriebenen Methoden fixiert. Die Vorrichtung zur Aufnahme der Enden 7 der Feder 1 im Stempel 13 des Auflagers 14 stellt eine Nut 15 für das Ende 7 der unteren Feder 1 und eine von oben offene Nut 16 für das Ende 7 der oberen Feder 1 dar. Eine ebensolche Nut wird am Stempel 8 (Fig. 1) bei Anbringung nur einer Feder 1 am Stempel ausgeführt.

Die Federn können am Stempel des Auflagers auch mit anderen bekannten, für diesen Zweck geeigneten Mitteln befestigt werden.

Fig. 4 zeigt einen schwingungsisolierten Hammer mit einer in eine Flüssigkeit getauchten Schabotte 5 und einer bereits beschriebenen schwingungsisolierenden Vorrichtung.

- 8 -

Ein Teil der Schabotte 5 des Hammers ist in eine Flüssigkeit 17 getaucht, die eine unter der Schabotte gelegene Grube 18 füllt. In der Sohle der Schabotte 5 ist ein von unten offener, mit Luft gefüllter Hohlraum 19 ausgeführt.

Solch eine Ausführung verbessert die Schwingungsisolation des Hammers. Das Auswechseln der schwingungsisolierenden Vorrichtung ist in diesem Fall auch leicht und schnell ausführbar nach dem Abpumpen der die Grube unter der Schabotte füllenden Flüssigkeit.

Das Verfahren zum Auswechseln der Federn in der oben beschriebenen schwingungsisolierenden Vorrichtung beinhaltet die Entlastung der beschädigten Blattfeder 1, deren Entfernung und die darauffolgende Montage einer neuen Feder 1 in umgekehrter Reihenfolge. Vor dem Entlasten der beschädigten Feder 1 wird ihr Ende 7 nach oben gezogen bis zur vollen Entlastung des Auflagers 9 oder 14, wonach das Auflager 9 oder 14 entfernt und die Entlastung der beschädigten Feder 1 durch Herabsenken ihres angehobenen Endes 7 vorgenommen wird.

Ausführlicher wird das Verfahren zum Auswechseln einer Blattfeder 1 nachstehend bei der Beschreibung des Betriebs der Vorrichtung und ihrer Demontage und Montage betrachtet.

Der Betrieb der oben beschriebenen, schwingungsisolierenden, unter einem Schmiedehammer aufgestellten Vorrichtung läuft folgendermaßen ab.

Auf die waagerechte Auflagefläche des Fundaments 11 legt man die elastischen Zwischenlagen 12 und stellt darauf die Auflager 9. An den Stempeln 8 der Auflager 9 bringt man die Enden 7 der Federn 1 an. Die Federn 1 werden so angeordnet, daß ihre Bügel 3 bei der Montage der Schabotte 5 des Schmiedehammers in die Vertiefungen 6 in der Sohle 4 der Schabotte 5 hineintreten. Der Betrieb des Hammers ist dadurch gekennzeichnet, daß die Schabotte 5 bei einem Schlag einen erheblichen Energieimpuls in einem breiten Frequenz- und Geschwindigkeitsbereich empfängt, der durch die mit Federn wirkende schwingungsisolierende Vorrichtung gelöscht wird.

- 9 -

Die Dynamik des Zusammendrückens der Feder 1 verursacht eine gewisse Bewegung ihrer Enden 7, die zusammen mit dem Auflager 9 infolge der elastischen Eigenschaften der Zwischenlage ausgeführt werden kann.

Jedes mit der Schabotte 5 über die Feder 1 und mit dem Fundament 11 über die elastische Zwischenlage 12 verbundene Auflager 9 übt die Funktion eines dynamischen Dämpfers hoher Frequenzen aus.

Beim Betrieb des Hammers gelangt Hammerschlag selbst bei guter Abdichtung des Bodenbelags (nicht abgebildet) zwischen die Feder 1 und das Fundament 11.

Die Anbringung der Enden 7 der Federn 1 am Auflager 9 in der Höhe H verhindert ein Anpressen des Hammerschlags durch das untere Blatt 2 der Feder 1.

Da die Feder 1 eine verhältnismäßig hohe Belastung aufnimmt und ein überaus beanspruchtes Konstruktionselement darstellt, nutzt sie sich ab und muß ausgewechselt werden.

Zum Auswechseln der beschädigten Feder muß sie unter der Schabotte 5 des Hammers hervor entfernt werden.

Zu diesem Zweck legt man unter das Ende 7 der Feder 1 in der Zone des Stempels 8 des außerhalb der Begrenzungslinie der Schabotte 5 befindlichen Auflagers 9 ein Seil 20 (Fig. 1, 2) oder ein anderes für diesen Zweck verwendbares Mittel. Mit Hilfe eines Hebezeugs (nicht abgebildet), z.B. eines Krans, einer Bockwinde, einer Seilwinde oder eines Flaschenzugs zieht man das Ende 7 der Feder 1 nach oben, bis es sich vom Stempel 8 abhebt. Danach entfernt man das Auflager 9 zusammen mit der elastischen Zwischenlage 12 und läßt das anfangs nach oben gezogene Ende 7 der Feder 1 auf das Fundament 11 hinab. Auf diese Weise entlastet man die beschädigte Feder 1. Der Bügel 3 wird aus der Vertiefung 6 in der Sohle 4 der Schabotte 5 herausgenommen. Das Seil 20 verlegt man vom Ende 7 der Feder 1 zu deren Mitte zum Gewichtsausgleich und zur Erleichterung des Entfernens der Feder 1. Das zweite Auflager 9 der zu entfernenden Feder 1 verbleibt an seinem Ort.

Das Anbringen einer neuen Feder geschieht in umgekehrter Reihenfolge.

Das Ende 7 einer neuen, am Seil 20 hängenden Feder 1 führt man auf das an seinem Ort verbliebene Auflager 9. Das Seil 20 verschiebt man zum Ende 7 der Feder 1, wobei man einen Teil der Feder 1 frei läßt zum Auflegen auf den Stempel 8. Dann hebt man das Ende 7 der Feder 1 so weit an, daß das Auflager 9 und die elastische Zwischenlage 12 aufgestellt werden können. Dabei muß darauf geachtet werden, daß der Bügel 3 in die Vertiefung 6 in der Sohle 4 der Schabotte 5 eintritt. Dann bringt man die elastische Zwischenlage 12 und das Auflager 9 an ihre vorherige Stelle. Das angehobene Ende 7 der Feder 1 läßt man auf den Stempel 8 des Auflagers 9 in ihre fixierende Nut herab. Das Seil 20 entfernt man. Der Schmiedehammer ist für den weiteren Betrieb einsatzbereit.

Bei der Anordnung der Federn in zwei Stufen geschieht das Auswechseln der Federn auf oben beschriebene Weise, wobei die Enden 7 der Federn 1 auf beiden Stufen angehoben werden.

Wenn ein Teil der Schabotte des Hammers und die beschriebene schwingungsisolierende Vorrichtung in eine Flüssigkeit getaucht sind, geschieht das Auswechseln der Federn ebenso, wie bereits beschrieben, nachdem die Flüssigkeit abgelassen worden ist.

Die beschriebenen schwingungsisolierenden Vorrichtungen sind für Schmiedehämmer verschiedener technologischer Zweckbestimmung und unterschiedlicher Leistung erprobt worden.

Die Versuchsergebnisse zeugen von einer verhältnismäßig hohen Zuverlässigkeit und Lebensdauer der schwingungsisolierenden Vorrichtung bei verhältnismäßig hoher Qualität der Schwingungsisolation. Das Auswechseln einer beschädigten Feder wird von einem Arbeiter im Verlauf von 15 bis 20 Minuten vorgenommen.

Industrielle Anwendbarkeit

Am zweckmäßigsten ist die Verwendung der vorliegenden Erfindung beim Aufstellen von Schmiedehämmern und Pressen auf ein Fundament.

Die Erfindung kann beim Aufstellen von Dampf- und Gas-

- 11 -

turbinen, Zerkleinerungs- und Mahleinrichtungen und ähnlichen Maschinen auf Fundamente verwendet werden.

Die Erfindung kann auch bei der Errichtung von Fundamenten für Gebäude und Anlagen in erdbebengefährdeten Zonen eingesetzt werden.

- 12 -

PATENTANSPRÜCHE

1. Schwingungsisolierende Vorrichtung für stoß- oder vibrationserzeugende Maschinen, die Blattfedern (1) enthält, die mit ihren Bügeln (3) in Vertiefungen (6) hineinragen, die in der Sohle (4) der Maschine ausgeführt sind, und mit den Enden (7) auf auf einem Fundament (11) stehenden Auflagern (9, 14) liegen, dadurch gekennzeichnet, daß die Enden (7) jeder Blattfeder (1) auf einem individuellen Auflager (9, 14) in einer Höhe H über dem Fundament (11) liegen, die durch folgende Bedingung bestimmt wird:

$$H > 2 (h + \delta ),$$

worin

h - Tiefe der Versenkung des Bügels (3) der Blattfeder (1) in die Sohle der Maschine;

$\delta$ - statische Durchbiegung der Blattfeder (1) sind.

2. Schwingungsisolierende Vorrichtung nach Anspruch 1, dadurch gekennzeichnet, daß das Auflager (9, 14) eine T-förmige Gestalt hat und mit dem Flansch (10) zum Fundament (11) hin gerichtet ist, während auf dem Stempel (8, 13) das Ende (7) der Blattfeder (1) auflagert.

3. Schwingungsisolierende Vorrichtung nach den Ansprühen 1 und 2, dadurch gekennzeichnet, daß die Blattfedern (1) in zwei Stufen derart angebracht sind, daß die Bügel (3) der oberen Stufe auf den Bügeln (3) der unteren Stufe auflagern, während der Stempel (13) jedes Auflagers (14) für die Aufnahme der Enden (7) der Blattfedern beider Stufen in einer Entfernung (L) voneinander, die der Höhe des Bügels (3) gleicht, eingerichtet ist.

4. Verfahren zur Demontage und Montage einer schwingungsisolierenden Vorrichtung nach den Ansprüchen 1, 2, 3, das die Entlastung einer beschädigten Blattfeder (1), deren Entfernung und die darauffolgende Montage einer neuen Blattfeder (1) in umgekehrter Reihenfolge beinhaltet, dadurch gekennzeichnet, daß vor der Entlastung der beschädigten Blattfeder (1) ihr Ende (7) nach oben gezogen wird bis zur vollen Entlastung des Auflagers (9, 14), wonach das Auflager (9, 14) entfernt und die beschädigte Blattfeder (1) durch Herabsenken ihres angehobenen Endes (7) entlastet wird.

5. Schmiedehammer, der mit seiner Schabotte auf einer schwingungsisolierenden Vorrichtung montiert ist, dadurch gekennzeichnet, daß die schwingungsisolierende Vorrichtung nach Anspruch 1 ausgeführt ist, wobei ein Teil der Schabotte (5) des Hammers und die schwingungsisolierende Vorrichtung in eine Flüssigkeit getaucht sind.

6. Schmiedehammer nach Anspruch 5, dadurch gekennzeichnet, daß in der Sohle der Schabootte (5) des Schmiedehammers ein von unten offener Hohlraum (19)ausgeführt ist.

1/2

FIG.1

FIG.2

FIG.3

*FIG.4*

# INTERNATIONAL SEARCH REPORT

International Application No PCT/SU86/00129

## I. CLASSIFICATION OF SUBJECT MATTER (if several classification symbols apply, indicate all) [3]

According to International Patent Classification (IPC) or to both National Classification and IPC

$IPC^4$ - B 21 J 13/06, F 16 F 15/04

## II. FIELDS SEARCHED

### Minimum Documentation Searched [4]

| Classification System | Classification Symbols |
|---|---|
| $IPC^4$ | B 21 J 13/00, 13/06, F 16 F 15/04 |

### Documentation Searched other than Minimum Documentation to the Extent that such Documents are Included in the Fields Searched [5]

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| A | SU, A1, 889251 (Izhevsky mekhanichesky zavod), 18 December 1981 (18.12.81), see lines 15-20 of column 1, the claims | 1,2,3 |
| A | SU, A1, 1074648 (Kharkovsky Promstroiniiproekt) 23 February 1984 (23.02.84), see lines 20-30 of column 1, the claims | 1,2,4 |
| A | SU, A1, 1153144 (Proektny nauchno-issledovatelsky institut "Kharkovsky Promstroi NIIproekt" 30 April 1985 (30.04.85), see lines 25-30 of column 1 | 1,2 |

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [2] | Date of Mailing of this International Search Report [2] |
|---|---|
| 30 September 1986 (30.09.86) | 21 October 1986 (21.10.86) |
| International Searching Authority [1]<br><br>ISA/SU | Signature of Authorized Officer [20] |

Form PCT/ISA/210 (second sheet) (October 1977)